# EUROPÄISCHE PATENTSCHRIFT

(11) **EP 1 906 281 B1**
(45) Veröffentlichungstag und Bekanntmachung des Hinweises auf die Patenterteilung: **06.04.2011**
(21) Anmeldenummer: 06020663.8
(22) Anmeldetag: 30.09.2006
(51) Int. Cl.: G05B 19/4061, G05B 19/4069, B25J 9/16

(54) **Verfahren und System zur Auslegung und Überprüfung von Sicherheitsbereichen eines Roboters**
Method and system for designing and verifying safety areas of an industrial robot
Procédé et système pour la conception et la vérification de zones de sécurité d'un robot industriel

(43) Veröffentlichungstag der Anmeldung: 02.04.2008
(73) Patentinhaber: ABB Technology AG, 8050 Zürich (CH)
(72) Erfinder: Kock, Sönke, Dr.-Ing., 72463 Västeras (SE); Löschner, Adam, 1190 Wien (AT); Winterhalter, Christoph, Dipl.-Inform., 61231 Bad Nauheim (DE); Behnisch, Kevin, 61231 Bad Nauheim (DE); Krieger, Roland, 68526 Ladenburg (DE)
(74) Vertreter: Miller, Toivo

(56) Entgegenhaltungen:
- EP-A2- 1 332 841
- DE-A1- 10 226 140
- DE-A1- 10 361 132
- DE-A1-102005 011 143
- US-A- 6 166 504

## Beschreibung

Die Erfindung betrifft ein Verfahren zur Simulation eines Bewegungsbereiches eines Roboters mit mindestens einer Datenverarbeitungsanlage. Zudem betrifft die Erfindung ein System zur Durchführung des Simulationsverfahrens.

Es ist allgemein bekannt, dass durch die Bewegungen eines Roboters eine Gefährdung für Menschen besteht, die sich in einer ungesicherten Umgebung in Reichweite des Roboters aufhalten, und die mit verschiedenen technischen Maßnahmen möglichst gering gehalten wird. So weist zum Beispiel ein Roboter neben einer Robotersteuerung auch eine Sicherheitssteuerung auf, die bestimmte Sicherheitsparameter für den Roboter überwacht. So können insbesondere die Freiheitsgrade für die Roboterbewegung durch eine Wertebeschränkung für einzelne oder mehrere Roboterachsen festgelegt werden. Es ist auch allgemein bekannt, dass manuelle Sicherheitszonen, zum Beispiel Zäune oder Wände so angebracht werden, dass sich der Roboter jedenfalls innerhalb der Sicherheitszone bewegt, insbesondere indem die Zäune außerhalb des vom Roboter maximal erreichten Bereiches aufgestellt werden

Aus der DE 102 26 140 A1 ist ein Verfahren zur Simulation eines Bewegungsbereiches eines Roboters bekannt.

Aus der DE 103 61 132 A1 ist ein Verfahren zur Überwachung der Bewegung eines Handhabungsgerätes, kurzum eines Roboters, bekannt, welches dazu vorgesehen ist, dessen Bremsweg so minimal wie möglich zu halten, um Stoss- und Quetschgefahren zwischen gefährdeten Objekten und dem Handhabungsgerät zu reduzieren. Die hieraus bekannte Lösung sieht vor, ständig die kinetische Energie des Handhabungsgerätes einschließlich dessen Entfernung zu einem potentiellen Kollisionspunkt mit dem gefährdeten Objekt zu berechnen, wobei die Geschwindigkeit v des Handhabungsgerätes ständig nachgeregelt und überwacht wird.

Aus der US-A-6 166 504 ist eine Steuerung für einen Roboter mit einem sich in einem zulässigen Arbeitsbereich bewegenden Arm bekannt, bei der ebenfalls ständig die Position und die Bewegungsgeschwindigkeit des Roboterarms erfasst wird, um bei Abweichung von einem vorgegebenen Wert dessen Stopp herbeizuführen.

Aus der DE 102005011143 schließlich ist eine Vorrichtung sowie ein Verfahren zum Steuern einer sicherheitsrelevanten Funktion bekannt, gemäß welcher eine Werkzeugmaschine oder ein Roboter kontinuierlich oder in Echtzeit im Hinblick auf eine Veränderung der Kontur des zugeordneten Sicherheitsbereichs überwacht wird. Auch diese Überwachung zielt ab auf eine zeitnahe Reaktion auf auftretende Störereignisse.

Zum Teil werden die Sicherheitszonen auch mit Hilfe von sogenannten Offline-Simulationen, also Bewegungssimulationen eines Roboters ermittelt.

Ausgehend von diesem Stand der Technik, ist es Aufgabe der Erfindung, ein Verfahren und ein System zur Simulation eines Bewegungsbereiches eines Roboters anzugeben, welches eine besonders genaue Berechnung der Bewegungen, insbesondere der Bremswege des Roboters, auch Nachlaufwege genannt, ermöglicht.

Diese Aufgabe wird gelöst durch ein Verfahren zur Simulation eines Bewegungsbereiches eines Roboters mit den in Anspruch 1 angegebenen Merkmalen.

Das Verfahren der eingangs genannten Art sieht vor, dass mit einem bevorzugt virtuellen Sicherheitssteuerungsmodul für eine Anzahl von wählbaren Punkten auf der Bewegungsbahn eines Roboters jeweils eine Bremsstrecke berechnet wird, und dass ein virtueller Bewegungsbereich unter Berücksichtigung der Bremsstrecken berechnet wird, der die vom Roboter maximal erreichbaren Positionen für die Bewegungsbahn berücksichtigt.

Unter virtuell ist zu verstehen, dass es sich hier nicht um ein reales Sicherheitssteuerungsmodul, sondern um ein Softwaremodul, welches die Funktion des realen

Geräts sowie das Anhalteverhalten des Roboters in einer Datenverarbeitungsanlage simuliert, handelt.

Auf diese Weise wird der Bremsweg des Roboters bei der Berechnung seines Bewegungsbereiches mit berücksichtigt. Unter Bremsweg ist der Anhalteweg des Roboters aus der Bewegung bis zur Geschwindigkeit Null zu verstehen, wobei der Roboter mittels mechanischer Bremsen, ungesteuerter elektrischer Motorbremse oder auch gesteuerter Verzögerung auf der programmierten Bahn handeln kann. Schließlich besteht auch ein Gefahrenpotential für den Raumbereich, den ein Roboter zum Abbremsen von seiner Bewegung bis zum Stillstand benötigt. Auf diese Weise wird neben der Bewegungsbahn selbst auch der "dynamische Anteil", nämlich die Bewegung des Roboters selbst vom Stopp-Befehl aus der Robotersteuerung bis zum Still- stand des Roboters in der Simulation berücksichtigt. Das Ergebnis der Simulation ist der tatsächliche vom Roboter maximal erreichte Raumbereich für eine Bewegungsbahn. Die Simulation kann je nach Bewegungsbahn und Geschwindigkeit, die der Roboter in den einzelnen Bewegungspunkten erreicht, entsprechend verschieden sein. Jedenfalls ist jedoch erreicht, dass der so erhaltene virtuelle Bewegungsbereich im Vergleich zu den bisher bekannten Simulationen, die sich auf ein "geometrisches" Modell der reinen Bewegungsbahn selbst stützen, verbessert ist.

Die Genauigkeit des erfindungsgemäßen Verfahrens wird weiter erhöht, wenn die Bremsstrecke unter Berücksichtigung des Raumbedarfs und/oder der Position und/oder der Orientierung des verwendeten Werkzeuges im gewählten Punkt berechnet wird.

Je nach Geometrie des Werkzeuges und sonstigen physikalischen Randbedingungen ist der virtuelle Bewegungsbereich entsprechend veränderlich. Insofern wird die Genauigkeit der Simulation erhöht, wenn diese physikalischen Randbedingungen bei der Berechnung des virtuellen Bewegungsbereiches Berücksichtigung finden.

Eine Fortbildung des erfindungsgemäßen Verfahrens sieht vor, dass ein vom Roboter unerreichbarer Sicherheitsbereich definiert wird, der wenigstens teilweise von dem Bewegungsbereich beabstandet ist.

Auf diese Weise wird besonders einfach ein Sicherheitsbereich gefunden, der sicherstellt, dass Gegenstände oder Personen, die sich in dieser Zone aufhalten, keinesfalls durch den Roboter gefährdet werden.

So ist es auch vorgesehen, dass eine Kollisionsprüfung zwischen dem Bewegungsbereich und dem Sicherheitsbereich durchgeführt wird.

Derart können bei einem vorgegebenen Sicherheitsbereich, zum Beispiel durch bauliche Vorgaben oder aufgrund einer bereits bestehenden Sicherheitszone Prüfungen durchgeführt werden, ob der Bewegungsbereich tatsächlich einen Eingriff in den Sicherheitsbereich ausschließt.

In einer vorteilhaften Ausgestaltung des erfindungsgemäßen Verfahrens wird der Sicherheitsbereich und/oder der Bewegungsbereich auf einer Anzeigevorrichtung dargestellt. Genauso kann die Bewegungsbahn und/oder die Bremsstrecke und/oder die sich nach einem Bremsvorgang bis zum Stillstand ergebende Position des Roboters auf der Anzeigevorrichtung dargestellt werden.

Durch eine Visualisierung sind die Ergebnisse der Berechnung besonders günstig dargestellt, so dass die Ergebnisse sozusagen "auf einen Blick" erkennbar sind, wobei die Überprüfung durch das Ausführen des Bewegungsprogrammes durch den Roboter entfällt.

Die Aufgabe wird auch gelöst durch ein erfindungsgemäßes System zur Simulation eines Bewegungsbereichs eines Roboters mit den in Anspruch 10 genannten Merkmalen.

Demgemäß sieht ein System zur Simulation eines Bewegungsbereiches eines Roboters mit einer Datenverarbeitungsanlage und mit einem Steuerungsmodul zur Steuerung der Bewegungsabläufe des Roboters vor dass ein Sicherheitssteuerungsmodul mit dem Steuerungsmodul zusammenarbeitet, dass mit dem Sicherheitssteuerungsmodul für eine Anzahl von wählbaren Punkten auf der Bewegungsbahn des Roboters jeweils eine Bremsstrecke berechenbar ist, und dass mit dem Sicherheitssteuerungsmodul ein virtueller Bewegungsbereich unter Berücksichtigung der Bremsstrecken berechenbar ist, der den vom Roboter maximal erreichbaren Bereich für die Bewegungsbahn berücksichtigt.

Die Berücksichtigung der Bremsstrecken erfolgt durch ein Sicherheitssteuerungsmodul, das mit dem seither bekannten Steuerungsmodul zusammenarbeitet. Durch die Berücksichtigung der Bremsstrecken ergibt sich im Wesentlichen eine realitätsnähere Berechnung des Bewegungsbereichs eines Roboters, für den Fall, dass die Sicherheitseinrichtungen des Roboters greifen und dieser zum Stillstand gebracht werden muss. Das Ergebnis der Simulation ist hierdurch wesentlich verbessert.

Für eine Gesamtbetrachtung der Bewegungsabläufe und des benötigten Bewegungsbereichs des Roboters wird der virtuelle Bewegungsbereich dadurch berechnet, dass mit dem Sicherheitssteuerungsmodul eine Position nach dem Bremsvorgang bei Stillstand des Roboters berechenbar ist.

Ein weiterer Vorteil besteht darin, dass das System "Offline" arbeitet, also dadurch gekennzeichnet ist, dass das Steuerungsmodul rund oder das Sicherheitssteuerungsmodul in der Datenverarbeitungsanlage implementiert sind.

Auf diese Weise können wesentliche Festlegungen, zum Beispiel für den Sicherheitsbereich für den realen Roboter getroffen werden. Auch die Handhabung von Festlegungen oder geänderter Festlegungen durch Laden oder Neuerstellen, Prüfungen von Sicherheitsbereichen in der Simulation mit Hilfe der virtuellen Sicherheitssteuerung, ggf. Modifizieren, Abspeichern, und ein Datenexport der sicherheitsgerichteten Daten in die realen Sicherheitssteuerung

Ein weiterer Vorteil der Erfindung besteht darin, dass der Bediener einen visuellen Eindruck davon bekommt, wie sich die programmierte Bahn und Geschwindigkeit auf die Lage und Größe der zu definierenden Sicherheitsbereiche auswirkt, um gegebenenfalls durch Modifikation der Roboterbewegung die Lage und Größe der Sicherheitsbereiche zu optimieren, um zum Beispiel den Flächenbedarf der Roboterinstallation zu minimieren. Daraus ergibt sich für den Betreiber der Roboteranlage ein Kostenvorteil.

Weitere vorteilhafte Ausgestaltungen des Erfindungsgegenstandes sind den weiteren abhängigen Ansprüchen zu entnehmen.

Anhand der in den Zeichnungen dargestellten Ausführungsbeispiele sollen die Erfindung, ihre Vorteile sowie weitere Verbesserungen der Erfindung näher erläutert werden.

Es zeigen:
- Fig. 1: eine Darstellung eines Simulationsergebnisses für einen Bewegungsbe- reich,
- Fig. 2: eine Draufsicht auf einen Sicherheitsbereich in dem ein Roboter ange- ordnet ist und
- Fig. 3: ein Ablaufschema für ein Verfahren zur Simulation eines Bewegungs- bereichs.

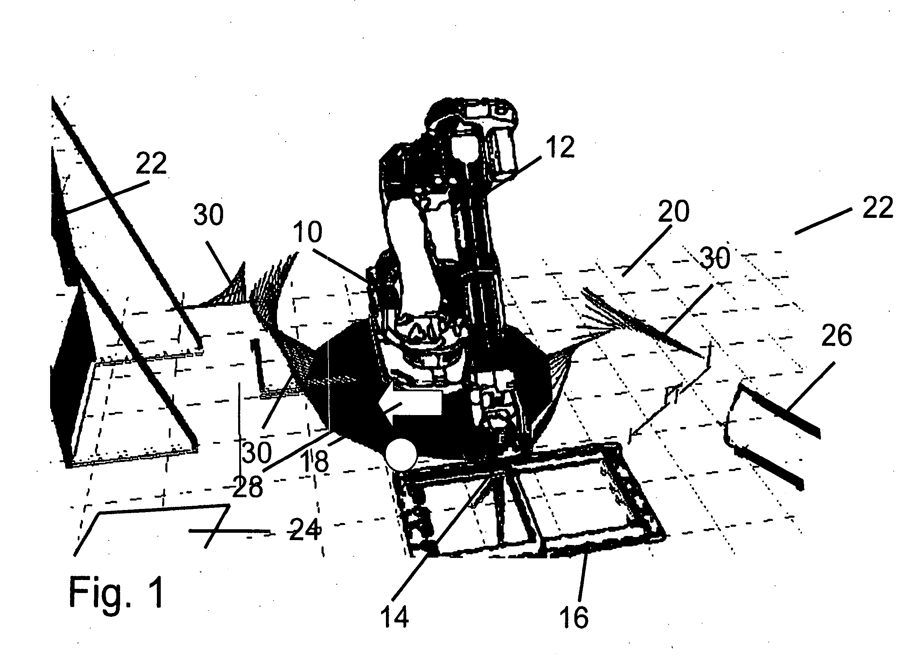

Figur 1 zeigt eine grafische Darstellung einer Simulation eines Bewegungsbereichs auf einer Anzeigvorrichtung, z. B. ein Bildschirm eines Computersystems. Dabei wurde der Bewegungsbereich eines Roboters 10 mit einem Roboterarm 12 betrachtet, der an einem Werkzeuganschlusspunkt 14 an einem Werkstückträger 16 angebracht ist. Der Roboter 10 ist dafür eingerichtet, nach einem, in der Robotersteuerung hinterlegten Bewegungsprogramm, einen bestimmten Arbeitsablauf, also einer vorgegebene Bewegungsbahn, zu folgen. Dabei sind die Bewegungen jedes einzelnen Gelenks des Roboterarms 12 sowie z. B. Drehbewegungen des Roboters insgesamt exakt vorgegeben. Ein Pfeil 18 symbolisiert dabei, dass der Roboter 10 sich in die durch den Pfeil angegebene Richtung bewegt und die Darstellung lediglich eine Momentaufnahme in dieser Bewegung ist. Ein Bodenbereich 20, auf dem der Roboter 10 steht, ist durch ein Gitternetz angedeutet, während eine Begrenzung einer Sicherheitszone durch Stellwände 22 dargestellt ist. Zudem sind die erreichbaren Arbeitsbereiche des Roboters 10 ein Werkzeugtisch 24 sowie ein Schweißwerkzeug 26 gezeigt, die so angeordnet sind, dass der Roboter 10 den Werkstückträger 16 zwischen dem Werkzeugtisch 24 und das Schweißwerkzeug 26 bedarfsweise hin und her bewegen kann.

In dieser Darstellung ist zudem noch ein Graf 28 eingezeichnet, der eine Vielzahl von Strichen 30 aufweist, wobei jeder dieser Striche 30 eine Strecke darstellt, die der Roboter benötigt, um von einem bestimmten Punkt seiner Bewegungsbahn bis zum Stillstand abzustoppen, im Weiteren als Bremsstrecke bezeichnet. Zudem kann der Graf 28 dahingehend interpretiert werden, dass die Verbindung der einen Enden der Striche 30 als Bewegungsbahn zu verstehen ist, während die Striche selber die jeweiligen Bremsstrecken in den verschiedenen Punkten der Bewegungsbahn darstellen.

Durch den Graf 28 wird verdeutlicht, dass der vom Roboter 10 benötigte Sicherheitsbereich unter Berücksichtigung der Bremsstrecken verschieden zu dem Sicherheitsbereich sein kann, der nur die Bewegungsbahn selbst berücksichtigt. Dies wird insbesondere durch die "freien Enden" der Striche 30 dargestellt. Der simulierte Bewegungsbereich des Roboters 10 stellt also den tatsächlich von diesem erreichbaren Bereich nach dessen Stillstand in jedem Bewegungspunkt der Bewegungsbahn dar.

Wird der Graf 28 zweckmäßig ergänzt, entsteht ein räumlicher Bereich, der insgesamt vom Roboter 10 für die betreffende Bewegungsbahn beansprucht wird. Dabei ist es für das Ergebnis der Simulation von nachrangiger Bedeutung, ob für den Sicherheitsbereich eine zweidimensionale Darstellung von dessen Grenze oder eine dreidimensionale Darstellung des gesamten vom Roboter 10 überstreichenden Raumbereich als Bewegungsbereich gewählt wird.

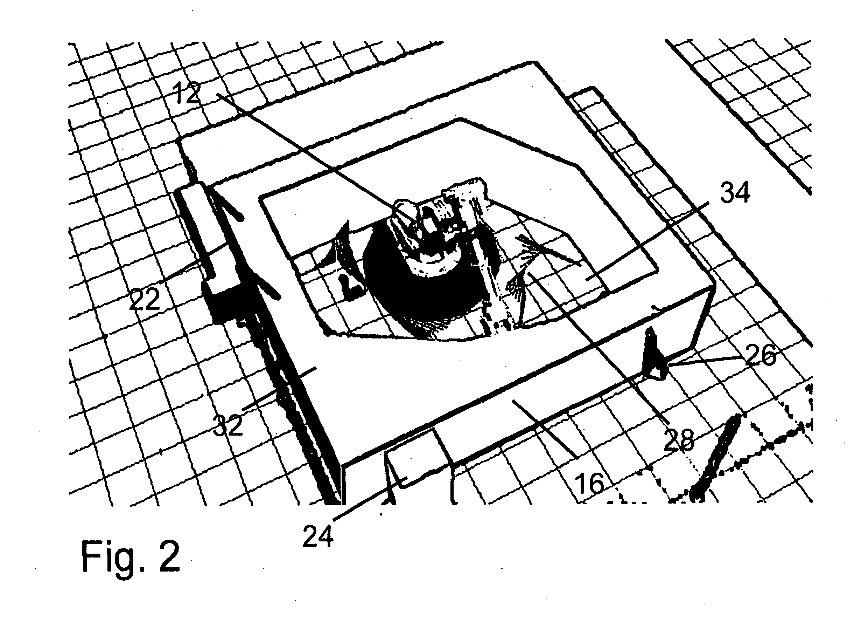

Figur 2 zeigt eine Draufsicht auf den virtuellen Arbeitsbereich des Roboters 12 mit der Darstellung eines Sicherheitsbereiches 32, in dem ein Bewegungsbereich 34 eingezeichnet ist, der für die Ausführung der Bewegungen des Roboters 12 vorgesehen ist.

Zur Überprüfung, ob der Bewegungsbereich 34 ausreichend für die betreffende Bewegungsbahn gewählt wurde, ist wiederum der Graf 28 gezeigt.

Im Übrigen sind die Bezugszeichen für gleiche Bauteile aus der Figur 1 übernommen.

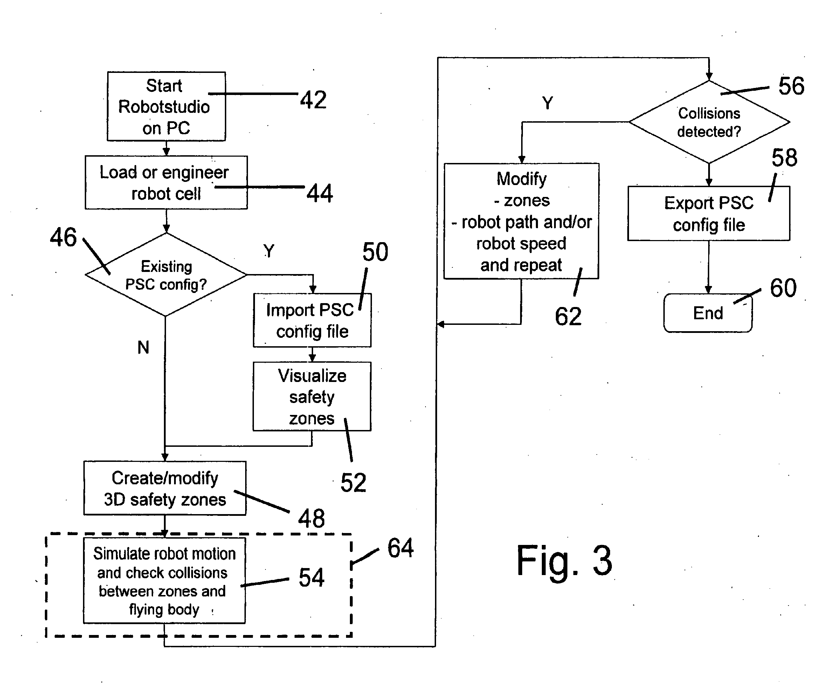

Figur 3 zeigt beispielhaft einen Verfahrensablauf für ein Verfahren der Simulation eines Bewegungsbereiches eines Roboters.

Dabei wird zunächst in einem ersten Verfahrensschritt ein Simulationsprogramm für einen Roboter, hier "Robotstudio" der Firma ABB, auf einer Datenverarbeitungsanlage gestartet. Ein derartiges Programm weist mehrere Module auf, unter anderem ein Steuerungsmodul, das eine virtuelle Robotersteuerung darstellt und mit der ein realer Robotercontroller "offline" also außerhalb der tatsächlichen Robotersteuerung oder zumindest ohne dass der Roboter Bewegungen ausführt, simulierbar ist. Im gewählten Beispiel läuft Robotstudio auf einer universellen Datenverarbeitungsanlage, z. B. Desktop oder Laptop.

In einem zweiten Verfahrensschritt 44 wird vom Programm entweder eine bestehende virtuelle Roboterzelle aus einer Datenbank geladen oder das Programm stellt ein Modul bereit, welches die Erstellung einer solchen Roboterzelle erlaubt.

In einem dritten Verfahrensschritt 46 wird einer ausgewählten oder erstellten Roboterzelle ein Konfigurationsdatensatz für eine Sicherheitssteuerung (PSC) zugeordnet. Dies kann auf zwei Arten erfolgen. Entweder ist der Roboterzelle bereits eine PSC-Konfigurationsdatei zugeordnet, so dass unmittelbar in einem vierten Verfahrensschritt 48 übergegangen werden kann oder die PSC-Konfigurationsdatei wird in einem fünften Verfahrensschritt 50 aus einer entsprechenden Datenbank importiert, wobei es möglich ist, in einem sechsten Verfahrensschritt vor dem Import der PSC- Konfigurationsdatei die Sicherheitszonen auf eine entsprechenden Anzeigevorrichtung, beispielsweise einem Bildschirm anzeigen zu lassen.

Im vierten Verfahrensschritt 48 werden nun bestehende dreidimensionale Sicherheitszonen modifiziert, erstellt oder gegebenenfalls auch nur bestätigt.

In einem siebten Verfahrensschritt 54 wird nunmehr die Roboterbewegung auf der Bewegungsbahn simuliert und zudem von einem Sicherheitssteuerungsmodul als Computerprogrammprodukt des Robotstudios auch die jeweilige Bremsstrecke auf den einzelnen ausgewählten Bahnpunkten des Roboters berücksichtigt. Mit diesen Daten ist nun eine Prüfung auf Kollision zwischen der Sicherheitszone und der vom Roboter maximal erreichbaren Position ermöglicht. Im gewählten Beispiel wird dabei sogar das Werkzeug des Roboters mit den entsprechenden räumlichen Dimensionen als sogenannter "Flying Body" berücksichtigt. Denn auch dieser "Flying Body" darf nicht in den Sicherheitsbereich des Roboters eintreten. Ein "Flying Body" repräsentiert graphisch die Position des Werkzeugs, bzw. mindestens eines Punktes am Werkzeug, am theoretischen Anhaltepunkt im Falle eines Nothalts des Roboters.

Die Überprüfung auf Kollision zwischen der Sicherheitszone und der Roboterposition hat zwei mögliche Ergebnisse und erfolgt in einem achten Verfahrensschritt 56, der entweder zum Ergebnis haben kann, dass keine Kollision entdeckt wird, so dass in einem neunten Verfahrensschritt 58 die Konfigurationsdaten exportiert werden, z. B. durch Ablegen in einer Datenbank oder durch Transfer unmittelbar an eine Robotersteuerung. In diesem Fall wird das Verfahren in einem zehnten Verfahrensschritt 60 beendet.

Im anderen Fall, nämlich dass im achten Verfahrensschritt 56 eine Kollision zwischen der Sicherheitszone und einer Roboterposition festgestellt wird, wird in einem elften Verfahrensschritt 62 zu einem Programmpunkt zurückgesprungen, in dem es möglich ist, entweder die Sicherheitszonen und/oder den Bewegungspfad des Roboters und/oder die Robotergeschwindigkeit anzupassen, und die Kollisionsprüfung auf die derart modifizierten Randbedingungen zu wiederholen.

Im gewählten Beispiel ist nur der siebte Verfahrensschritt 54 als eigenes Programmmodul, nämlich den Sicherheitssteuerungsmodul 64 ausgestaltet. Das Modul simuliert im Wesentlichen die beim realen Roboter vorhandene Sicherheitssteuerung.

Auf diese Weise ist auch erkennbar, wie das anmeldungsgemäße System zur Simulation eines Bewegungsbereiches eines Roboters mit jeder universellen Datenverarbeitungsanlage wie im Beispiel realisierbar ist. So enthält das Steuerungsmodul 64 zwei Einzelmodule, nämlich das Steuerungsmodul, welches die Bewegung des Roboters simuliert sowie ein Sicherheitssteuerungsmodul, weiches für eine Anzahl von wählbaren Punkten auf der Bewegungsbahn des Roboters jeweils eine Bremsstrecke berechnet. Diese können dann für die Berechnung des visuellen Bewegungsbereiches für den Roboter verwendet werden.

## Patentansprüche

1. Verfahren zur Simulation eines Bewegungsbereiches eines Roboters (10) mit mindestens einer Datenverarbeitungsanlage, wobei mit dieser Datenverarbeitungsanlage mindestens eine Bewegungsbahn des Roboters (10) simuliert wird, **dadurch gekennzeichnet, dass** für eine Anzahl von wählbaren Punkten auf einer vorgegebenen Bewegungsbahn des Roboters (10) jeweils eine Bremsstrecke berechnet wird, die von der vorgegebenen Bewegungsbahn abweicht und einen Punkt der vorgegebenen Bewegungsbahn mit einem Stillstandspunkt verbindet und dass unter Berücksichtigung der Bremsstrecken ein virtueller Bewegungsbereich (34) berechnet wird, der die vom Roboter (10) maximal erreichbaren Positionen für die Bewegungsbahn einschließt.

2. Verfahren nach Anspruch 1, **dadurch gekennzeichnet, dass** eine sich aus einem Bremsvorgang im Stillstand ergebende Position des Roboters (10) berechnet wird.

3. Verfahren nach Anspruch 1 oder 2, **dadurch gekennzeichnet, dass** die Bremsstrecke unter Berücksichtung einer Momentangeschwindigkeit im gewählten Punkt berechnet wird.

4. Verfahren nach einem der vorgenannten Ansprüche, **dadurch gekennzeichnet, dass** die Bremsstrecke unter Berücksichtung des Raumbedarfs und / oder der Position und oder der Orientierung des verwendeten Werkzeuges (26) im gewählten Punkt berechnet wird.

5. Verfahren nach einem der vorgenannten Ansprüche, **dadurch gekennzeichnet, dass** ein vom Roboter unerreichbarer Sicherheitsbereich (32) definiert wird, der wenigstens teilweise von dem virtuellen Bewegungsbereich (34) beabstandet ist.

6. Verfahren nach Anspruch 5, **dadurch gekennzeichnet, dass** eine Kollisionsprüfung zwischen dem Bewegungsbereich (34) oder einzelnen sich im Stillstand ergebenden Positionen und dem Sicherheitsbereich (32) durchgeführt wird.

7. Verfahren nach Anspruch 5 oder 6, **dadurch gekennzeichnet, dass** der Sicherheitsbereich (32) und oder der Bewegungsbereich (34) der einzelnen sich im Stillstand ergebenden Positionen auf einer Anzeigevorrichtung dargestellt werden.

8. Verfahren nach einem der vorgenannten Ansprüche, **dadurch gekennzeichnet, dass** die Bewegungsbahn und / oder die Bremsstrecke und / oder die sich nach einem Bremsvorgang bis zum Stillstand ergebenden Positionen des Roboters auf der Anzeigevorrichtung dargestellt werden.

9. Verfahren nach einem der vorgenannten Ansprüche, **dadurch gekennzeichnet, dass** die Datenverarbeitungsanlage den Sicherheitsbereich (32) an eine Robotersteuerung übermittelt oder für diese bereitstellt.

10. System zur Simulation eines Bewegungsbereiches eines Roboters (10) mit mindestens einer Datenverarbeitungsanlage und mit einem Steuerungsmodul zur Steuerung der Bewegungsabläufe des Roboters (10), wobei mit der Datenverarbeitungsanlage mindestens eine Bewegungsbahn des Roboters (10) simulierbar ist, wobei ein Sicherheitssteuerungsmodul mit dem Steuerungsmodul zusammenarbeitet, wobei das Sicherheitssteuerungsmodul und / oder das Steuerungsmodul ein Programmprodukt ist, **dadurch gekennzeichnet**
**dass** mit dem Sicherheitssteuerungsmodul für eine Anzahl von wählbaren Punkten auf einer vorgegebenen Bewegungsbahn des Roboters (10) jeweils eine Bremsstrecke berechenbar ist die von der vorgegebenen Bewegungsbahn abweicht und einen Punkt der vorgegebenen Bewegungsbahn mit einem Stillstandspunkt verbindet,
und **dass** mit dem Sicherheitssteuerungsmodul ein virtueller Bewegungsbereich (34) unter Berücksichtigung der Bremsstrecken berechenbar ist, der den vom Roboter (10) maximal erreichbaren Bereich für die Bewegungsbahn einschließt.

11. System nach Anspruch 10, **dadurch gekennzeichnet, dass** das Sicherheitssteuerungsmodul im Steuerungsmodul integriert ist.

12. System nach Anspruch 10 oder 11, **dadurch gekennzeichnet, dass** mit dem Sicherheitssteuerungsmodul eine Position nach dem Bremsvorgang bei Stillstand des Roboters (10) berechenbar ist.

13. System nach einem der vorgenannten Ansprüche 10 bis 12, **dadurch gekennzeichnet, dass** der Bewegungsbereich im Wesentlichen eine die berechneten Punkte und / oder Positionen verbindende flächige oder räumliche Form aufweist.

14. System nach einem der vorgenannten Ansprüche 10 bis 13, **dadurch gekennzeichnet, dass** das Steuerungsmodul und / oder das Sicherheitssteuerungsmodul in einer ersten Datenverarbeitungsanlage implementiert sind.

15. System nach einem der Ansprüche 10 bis 14, **dadurch gekennzeichnet, dass** eine zweite Datenverarbeitungsanlage vorgesehen ist, auf welcher die Simulation durchgeführt wird.

16. System nach einem der vorgenannten Ansprüche 10 bis 15, **dadurch gekennzeichnet, dass** in der wenigstens einen Datenverarbeitungsanlage eine Robotersteuerung nachgebildet ist.

17. System nach einem der vorgenannten Ansprüche 10 bis 16, **dadurch gekennzeichnet, dass** der Roboter (10) und/oder das Steuerungsmodul und/oder das Sicherheitssteuerungsmodul virtuelle Objekte in einem Simulationsprogramm in einem sind.

18. System nach einem der vorgenannten Ansprüche 10 bis 17, **dadurch gekennzeichnet, dass** ein Datenexport zwischen der Robotersteuerung und der wenigstens einen Datenverarbeitungsanlage ermöglicht ist.

## Claims

1. Method for simulation of a movement area of a robot (10) having at least one data processing system, with at least one movement path of the robot (10) being simulated by this data processing system, **characterized in that** a braking distance is calculated for each of a number of selectable points on a predetermined movement path of the robot (10), the braking distance differs from the predetermined movement path and connects a point on the predetermined movement path to a stationary point, and that a virtual movement area (34) is calculated taking into account the braking distances and comprising the maximum position which can be reached by the robot (10) for the movement path.

2. Method according to Claim 1, **characterized in that** a robot position which results from a braking process to the robot (10) being stationary is calculated.

3. Method according to Claim 1 or 2, **characterized in that** the braking distance is calculated taking into account the instantaneous speed at the selected point.

4. Method according to one of the abovementioned claims, **characterized in that** the braking distance is calculated taking into account the space requirement and/or the position and/or the orientation of the tool (26) being used at the selected point.

5. Method according to one of the abovementioned claims, **characterized in that** a safety area (32) is defined which the robot cannot reach and, at least in places, is at a distance from the virtual movement area (34).

6. Method according to Claim 5, **characterized in that** a collision test is carried out between the movement area (34) or individual positions which result when the robot is stationary, and the safety area (32).

7. Method according to Claim 5 or 6, **characterized in that** the safety area (32) and/or the movement area (34) of the individual positions which result when the robot is stationary are/is displayed on a display apparatus.

8. Method according to one of the abovementioned claims, **characterized in that** the movement path and/or the braking distance and/or the robot positions which result when the robot is stationary after a braking process are/is displayed on the display apparatus.

9. Method according to one of the abovementioned claims, **characterized in that** the data processing system transmits the safety area (32) to a robot control system, or produces it for this control system.

10. System for simulation of a movement area of a robot (10) having at least one data processing system and having a control module for controlling the movement sequences of the robot (10), wherein at least one movement path of the robot (10) can be simulated by the data processing system, a safety control module interacting with the control module, the safety control module and/or the control module are/is a program product, **characterized in that** a braking distance can be calculated by the safety control module for each of a number of selectable points on the predetermined movement path of the robot (10), the braking distance differs from the predetermined movement path and connects a point of the predetermined movement path to a stationary point, and **in that** a virtual movement area (34) can be calculated by the safety control module, taking into account the braking distances and comprising the maximum area which can be reached by the robot (10) for the movement path.

11. System according to Claim 10, **characterized in that** the safety control module is integrated in the control module.

12. System according to Claim 10 or 11, **characterized in that** a position when the robot (10) is stationary after the braking process can be calculated by the safety control module.

13. System according to one of the abovementioned Claims 10 to 12, **characterized in that** the movement area essentially has a two-dimensional or three-dimensional shape connecting the calculated points and/or positions.

14. System according to one of the abovementioned Claims 10 to 13, **characterized in that** the control module and/or the safety control module are/is implemented in a first data processing system.

15. System according to one of Claims 10 to 14, **characterized in that** a second data processing system is provided, on which the simulation is carried out.

16. System according to one of the abovementioned Claims 10 to 15, **characterized in that** a robot control system is simulated in the at least one data processing system.

17. System according to one of the abovementioned Claims 10 to 16, **characterized in that** the robot (10) and/or the control module and/or the safety control module are/is virtual objects in a simulation program.

18. System according to one of the abovementioned Claims 10 to 17, **characterized in that** data can be exported between the robot control system and the at least one data processing system.

## Revendications

1. Procédé de simulation de la plage de déplacement d'un robot (10) doté d'au moins une installation de traitement de données, cette installation de traitement de données simulant au moins un parcours de déplacement du robot (10),
**caractérisé en ce que**
une distance de freinage qui s'écarte du parcours de déplacement prédéterminé et qui relie un point du parcours de déplacement prédéterminé à un point d'arrêt est calculée pour plusieurs points sélectionnés sur un parcours de déplacement prédéterminé du robot (10) et
**en ce qu'**une plage virtuelle de déplacement (34) qui inclut les positions ultimes que le robot (10) peut atteindre sur le parcours de déplacement est calculée en tenant compte de la distance de freinage.

2. Procédé selon la revendication 1, **caractérisé en ce qu'**il calcule une position du robot (10) qui correspond à un arrêt après une opération de freinage.

3. Procédé selon les revendications 1 ou 2, **caractérisé en ce que** la distance de freinage est calculée en tenant compte de la vitesse instantanée au point sélectionné.

4. Procédé selon l'une des revendications précédentes, **caractérisé en ce que** la distance de freinage est calculée en tenant compte de l'encombrement, de la position et/ou de l'orientation de l'outil (26) utilisé au point sélectionné.

5. Procédé selon l'une des revendications précédentes, **caractérisé en ce qu'**il définit une plage de sécurité (32) que le robot ne peut atteindre et qui est située au moins en partie à distance de la plage virtuelle de déplacement (34).

6. Procédé selon la revendication 5, **caractérisé en ce qu'**il effectue un test de collision entre la plage de déplacement (34) ou différentes positions d'arrêt et la plage de sécurité (32).

7. Procédé selon les revendications 5 ou 6, **caractérisé en ce que** la plage de sécurité (32) et/ou la plage de déplacement (34) des différentes positions à l'arrêt sont représentées sur un dispositif d'affichage.

8. Procédé selon l'une des revendications précédentes, **caractérisé en ce que** le parcours de déplacement, la distance de freinage et/ou les positions du robot à l'arrêt après une opération de freinage sont représentés sur le dispositif d'affichage.

9. Procédé selon l'une des revendications précédentes, **caractérisé en ce que** le installation de traitement de données transmet la plage de sécurité (32) à une commande du robot ou la met à sa disposition.

10. Système de simulation d'une plage de déplacement d'un robot (10), qui présente au moins une installation de traitement de données et un module de commande qui commande le déroulement des déplacements du robot (10),
au moins un parcours de déplacement du robot (10) pouvant être simulé par l'installation de traitement de données,
un module de commande de sécurité coopérant avec le module de commande,
le module de commande de sécurité et/ou le module de commande étant des produits de programme, **caractérisé en ce que**
le module de commande de sécurité permet de calculer pour plusieurs points sélectionnés sur un parcours de déplacement prédéterminé du robot (10) une distance de freinage qui s'écarte du parcours de déplacement prédéterminé ou qui relie un point du parcours de déplacement prédéterminé à un point d'arrêt,
et **en ce que** le module de commande de sécurité permet de calculer une plage virtuelle de déplacement (34) qui tient compte de la distance de freinage et qui inclut la plage ultime que le robot (10) peut atteindre sur son parcours de déplacement.

11. Système selon la revendication 10, **caractérisé en ce que** le module de commande de sécurité est intégré dans le module de commande.

12. Système selon les revendications 10 ou 11, **caractérisé en ce que** le module de commande de sécurité permet de calculer une position d'arrêt atteinte par le robot (10) après l'opération de freinage.

13. Système selon l'une des revendications 10 à 12 qui précèdent, **caractérisé en ce que** la plage de déplacement présente essentiellement une forme plane ou tridimensionnelle et relie les points calculés et/ou les positions calculées.

14. Système selon l'une des revendications 10 à 13 qui précèdent, **caractérisé en ce que** le module de commande et/ou le module de commande de sécurité sont mis en oeuvre dans une première installation de traitement de données.

15. Système selon l'une des revendications 10 à 14, **caractérisé en ce qu'**il présente une deuxième installation de traitement de données sur laquelle la simulation est exécutée.

16. Système selon l'une des revendications 10 à 15 qui précèdent, **caractérisé en ce qu'**une commande de robot est simulée dans la ou les installations de traitement de données.

17. Système selon l'une des revendications 10 à 16 qui précèdent, **caractérisé en ce que** le robot (10), le module de commande et/ou le module de commande de sécurité sont des objets virtuels d'un programme de simulation.

18. Système selon l'une des revendications 10 à 17 qui précèdent, **caractérisé en ce qu'**une exportation de données est possible entre la commande du robot et la ou les installations de traitement de données.
